# EUROPEAN PATENT APPLICATION

(11) **EP 4 411 882 A1**
(43) Date of publication of application: **07.08.2024**
(21) Application number: 22875760.5
(22) Date of filing: 08.09.2022
(51) Int. Cl.: H01M 4/38, H01M 4/36, H01M 4/58, H01M 4/48

(54) **NEGATIVE ELECTRODE ACTIVE SUBSTANCE FOR SECONDARY BATTERY, METHOD FOR PRODUCING SAME, AND SECONDARY BATTERY**

(30) Priority: 28.09.2021 JP 2021158321
(71) Applicant: Panasonic Intellectual Property Management Co., Ltd., Kadoma-shi, Osaka 571-0057 (JP)
(72) Inventor: SAITO, Yusuke, Kadoma-shi, Osaka 571-0057 (JP); SATO, Yosuke, Kadoma-shi, Osaka 571-0057 (JP); SATO, Shin, Kadoma-shi, Osaka 571-0057 (JP); OKAZAKI, Keita, Kadoma-shi, Osaka 571-0057 (JP)
(74) Representative: Novagraaf International SA
(86) International application number: PCT/JP2022/033679
(87) International publication number: WO 2023/053888

(57) **Abstract**

A negative electrode active material for a secondary battery includes composite particles each including a matrix, and a silicon phase dispersed in the matrix. Each of the composite particles is coated with a coating layer. The coating layer is a mixture of a carbon material and a fluorine-containing material.

## Description

### [Technical Field]

The present invention relates a negative electrode active material for a secondary battery, and a method for producing the same, and a secondary battery including the aforementioned negative electrode active material for a secondary battery.

### [Background Art]

Secondary batteries, such as a non-aqueous electrolyte secondary, have a high voltage and a high energy density, and therefore have been recently considered to be promising as the power sources for compact consumer devices, power storage apparatuses, and electric vehicles. With an increasing need for higher energy density for the secondary batteries, materials containing silicon, which can form an alloy with lithium, are expected to be used as negative electrode active materials having a high theoretical capacity density.

However, a silicon-containing material, because of its high irreversible capacity, suffers from a low initial charge-discharge efficiency (in particular, a low ratio of the initial discharge capacity to the initial charge capacity). For this reason, various techniques have been proposed to introduce an amount of lithium corresponding to the irreversible capacity, into the silicon-containing material in advance. Specifically, it has been proposed to use composite particles each including a lithium silicate phase, and silicon particles dispersed in the lithium silicate phase (Patent Literature 1). The silicon particles contribute to charge-discharge reaction (reversible lithium absorption and desorption).

Patent Literature 2 proposes a negative electrode material for a non-aqueous electrolyte secondary battery, including negative electrode active material particles, wherein the negative electrode active material particles each include a silicon compound represented by SiOx where 0.5 ≤ x ≤ 1.6, the silicon compound includes a Li compound on a surface or inside thereof, and the negative electrode active material particles each have a coating layer composed of an organic polymer coating the surface of the silicon compound.

### [Citation List]

### [Patent Literatures]

Patent Literature 1: Japanese Laid-Open Patent Publication No. 2015-153520
Patent Literature 2: WO 2015/107581

### [Summary of Invention]

### [Technical Problem]

However, the composite particles described in Patent Literature 1 are known to undergo significant expansion and contraction of the silicon particles associated with absorption and desorption of lithium during charging and discharging. Accordingly, with the expansion and contraction of the silicon particles, a large stress is generated in the lithium silicate phase present around the silicon particles, thus causing cracking and fracture in the composite particles. This reduces the binding force between the composite particles and a binder located in the vicinity thereof, as a result of which the conductive particles, especially, fractured composite particles lose their conductive paths to the surrounding particles and become isolated. Also, the lithium silicate phase tends to be gradually eroded by a side reaction in the battery, thus causing a reduction in the charge-discharge cycle characteristics.

By coating the surfaces of the composite particles with the organic polymer described in Patent Literature 2, it is possible to suppress the reduction in the cycle characteristics to some degree. However, the coating layer composed of the organic polymer acts as resistance. Accordingly, the electron conductivity and the lithium ion conductivity are reduced, and the desired effect of suppressing the reduction in cycle characteristics may not be achieved.

### [Solution to Problem]

In view of the foregoing, an aspect of the present invention relates to a negative electrode active material for a secondary battery, including composite particles each including a matrix, and a silicon phase dispersed in the matrix, wherein each of the composite particles is coated with a coating layer, and the coating layer is a mixture of a carbon material and a fluorine-containing material.

Another aspect of the present invention relates to a method for producing a negative electrode active material for a secondary battery, including the steps of obtaining composite particles each including a matrix, and a silicon phase dispersed in the matrix; coating each of the composite particles with a carbon material, to form a coating layer; mixing the composite particles each having the coating layer formed thereon with powder of a fluorine-containing organic polymer, to obtain a mixture; and heat-treating the mixture at a temperature greater than or equal to a melting point of the fluorine-containing organic polymer, to allow the fluorine-containing organic polymer to permeate into the coating layer.

Yet another aspect of the present invention relates to a secondary battery including: a positive electrode; a negative electrode; an electrolyte; and an separator interposed between the positive electrode and the negative electrode, wherein the negative electrode includes a current collector and a negative electrode active material layer, and the negative electrode active material layer includes the above-described negative electrode active material for a secondary battery.

### [Advantageous Effects of Invention]

With the use of the negative electrode active material according to the present disclosure, it is possible to achieve a secondary battery having excellent charge-discharge cycle characteristics.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A cross-sectional view schematically showing a negative electrode active material (silicate composite particles) for a secondary battery according to an embodiment of the present invention.
[FIG. 2] A partially cut-away schematic perspective view of a secondary battery according to an embodiment of the present invention.

### [Description of Embodiments]

In the following, embodiments of the present disclosure will be described by way of examples. However, the present disclosure is not limited to the examples described below. Although examples of specific numerical values, materials, and the like may be given in the following description, other numerical values, materials, and the like may be used as long as the effects of the present disclosure can be achieved. Note that constituent elements of known secondary batteries may be used as constituent elements other than those characteristic of the present disclosure. As used herein, in the expression "a range from a numerical value Ato a numerical value B", this range includes the numerical value A and the numerical value B. For example, "Ato B mol%" is synonymous with "Amol% or more and B mol% or less". In the following description, when lower limits and upper limits are given as examples of numerical values relating to specific physical properties, conditions, and the like, any of the given lower limits and any of the given upper limits can be freely combined unless the lower limit is greater than or equal to the upper limit. When a plurality of materials are given as examples, one of the materials may be selected and used alone, or two or more of the materials may be used in combination.

The present disclosure encompasses combinations of matters recited in two or more claims freely selected from a plurality of claims recited in the appended claims. That is, matters recited in two or more claims freely selected from a plurality of claims recited in the appended claims can be combined as long as there are no technical discrepancies.

The secondary battery includes at least non-aqueous electrolyte secondary batteries such as a lithium ion battery, and all-solid batteries.

### (Negative electrode active material for secondary battery)

A negative electrode active material for a secondary battery according to an embodiment of the present disclosure includes composite particle including a matrix, and a silicon phase dispersed in the matrix. Each of the composite particles is coated with a coating layer. The coating layer is a mixture of a carbon material and a fluorine-containing material.

The composite particles have an island-in-the-sea structure in which the silicon phase (silicon particles) serving as island portions is dispersed in a matrix serving as a sea portion. An increased capacity can be achieved by controlling the amount of the silicon particles dispersed in the matrix. Also, since the silicon phase is dispersed in the matrix, the stress associated with the expansion and contraction of the silicon phase during charging and discharging can be reduced by the matrix, which makes it possible to reduce the expansion and contraction of the composite particles. Accordingly, it is possible to reduce cracking and fracture of the composite particles, thus easily achieving both an increased capacity and enhanced cycle characteristics of the battery.

Due to the composite particle surface (i.e., matrix surface) being coated with a coating layer, the cracking and fracture of the composite particle is suppressed, and the composite particle is protected from the electrolytic solution, thus suppressing side reactions. This suppresses the erosion of the matrix caused by a side reaction with the electrolytic solution, to enhance the charge-discharge cycle characteristics.

Among the materials constituting the coating layer, the carbon material has conductivity. Due to the poor electron conductivity of the matrix portion, the conductivity of the composite particle also tends to be low. However, the conductivity of the silicate composite particle can be dramatically increased by coating the surface of the composite particle with the carbon material having conductivity. The carbon material preferably includes at least one selected from the group consisting of carbon compounds and carbonaceous materials. The carbonaceous material may be crystalline carbon or amorphous carbon.

In contrast, of the materials constituting the coating layer, the fluorine-containing material has resistance to the electrolytic solution. Since the coating layer is a mixture of the carbon material and the fluorine-containing material, it is possible to achieve both the conductivity, and the resistance to the electrolytic solution, thus enhancing the charge-discharge cycle characteristics.

The coating layer constituted by a mixture of a carbon material and a fluorine-containing material is formed by, for example, coating the surface of each of the composite particles with a conductive layer composed of a carbon material, and then allowing a fluorine-containing organic polymer such as polyvinylidene fluoride (PVdF) to adhere to the conductive layer, followed by heat treatment at a temperature greater than or equal to the melting point of the fluorine-containing organic polymer. The heat treatment at a temperature greater than or equal to the melting point of the fluorine-containing organic polymer allows the fluorine-containing organic polymer to permeate into the conductive layer of the carbon material, to form a coating layer constituted by a mixture of the carbon material and the fluorine-containing material.

In this case, the concentration of the fluorine-containing organic polymer in the coating layer may have a distribution in which the concentration is higher on the surface side of the coating layer, and decreases toward the inside of the coating layer in the thickness direction (toward the matrix side). In other words, in the coating layer, fluorine (F) atoms may be distributed such that the concentration thereof is higher on the surface side of the coating layer, and decreases toward the inside of the coating layer in the thickness direction (toward the matrix side). The fluorine-containing organic polymer may permeate at least to a depth corresponding to half the thickness of the coating layer, to form a mixture.

Preferably, a fluorine (F) content A in the surface of the coating layer and a fluorine content B at a depth corresponding to half the thickness of the coating layer satisfy B > 0.1A. In this case, it is possible to achieve both a high level of conductivity, and a high level of resistance to the electrolytic solution, so that the effect of enhancing the charge-discharge cycle characteristics is increased. The fluorine content is determined by observing a cross section of a negative electrode active material layer (negative electrode mixture layer) using a SEM, and performing elementary analysis such as EDS for the location, as identified based on an image of the cross section, of the coating layer of the composite particle.

The fluorine-containing organic polymer may cause a reaction in which the fluorine-containing organic polymer reacts with an alkaline substance at a high temperature greater than or equal to its melting point, whereby fluorine atoms are eliminated from the fluorine-containing organic polymer. At this time, a carbon-carbon double bond is formed in the fluorine-containing organic polymer, and lithium fluoride (LiF) is produced. This results in formation of a coating layer including, as the fluorine-containing materials, the fluorine-containing organic polymer in which a carbon-carbon double bond is formed, and lithium fluoride. The produced LiF coats the surface of the composite particle (the surface of the matrix), and protects the matrix from the electrolytic solution. The coating layer including lithium fluoride stabilizes the surface of the matrix, thus suppressing side reactions.

For example, when the fluorine-containing organic polymer is polyvinylidene fluoride, according to the following reaction formula, polyvinylidene fluoride reacts with lithium silicate, whereby fluorine atoms are eliminated from the polyvinylidene fluoride, and lithium fluoride is produced. At this time, polyvinylidene fluoride undergoes polyenization, as a result of which some of carbon-carbon single bonds are changed to carbon-carbon double bonds, to form a - CH=CF-structure.

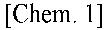

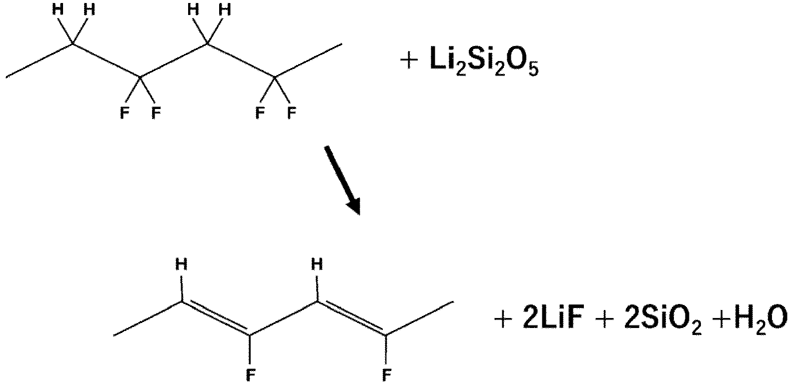

Besides polyvinylidene fluoride, a polymer including a vinylidene fluoride unit may be used as the fluorine-containing organic polymer. Examples of the polymer including a vinylidene fluoride unit include a copolymer of vinylidene fluoride and another monomer. Examples of another monomer include hexafluoropropylene (HFP) and tetrafluoroethylene (TFE). Examples of the polymer including a vinylidene fluoride unit include polyvinylidene fluoride (PVdF) and modified forms thereof, a vinylidene fluoride-hexafluoropropylene copolymer, and a vinylidene fluoride-chlorotrifluoroethylene copolymer. In the polymer including a vinylidene fluoride unit, the content of the vinylidene fluoride unit is, for example, 30 mol% or more, and may be 50 mol% or more.

Preferably, the coating layer has a thickness small enough not to substantially affect the average particle diameter of the composite particles. In consideration of the effect of protecting the composite particles from the electrolytic solution, as well as the securing of conductivity and the lithium ion diffusion, the thickness of the coating layer is preferably 1 nm or more and 100 nm or less. When the thickness of the coating layer is 1 nm or more, the effect of protecting the composite particles can be sufficiently achieved. When the thickness of the coating layer is 100 nm or less, the increase in the resistance caused by the coating layer is suppressed, so that enhanced cycle characteristics can be maintained. The thickness of the conductive layer can be measured by observing a cross section of a silicate composite particle using a SEM or a TEM (transmission electron microscope).

From the viewpoint of suppressing the increase in resistance in the coating layer to maintain high conductivity of the coating layer, it is preferable that the mass of the carbon material in the coating layer is larger than the mass of the fluorine-containing material in the coating layer

The mass of the fluorine-containing material is determined by, for example, washing the composite particles with a solvent such as N-methyl-2-pyrrolidone, to dissolve the fluorine-containing material contained in the coating layer, and measuring the difference in weights of the solvent before and after the dissolution. Thereafter, the composite particles are immersed in hydrofluoric acid, to dissolve the silicon component and the silicate component in the hydrofluoric acid. The remainder, which is not dissolved in hydrofluoric acid, is the carbon material. Therefore, the mass of the carbon material can be determined by measuring the weight of the remainder, which is not dissolved in hydrofluoric acid.

A method for producing a negative electrode active material for a secondary battery according to an embodiment of the present disclosure includes, for example, the steps of obtaining composite particles each including a matrix, and a silicon phase dispersed in the matrix; coating each of the composite particles with a carbon material, to form a coating layer; mixing the composite particles each having the coating layer formed thereon with powder of a fluorine-containing organic polymer, to obtain a mixture; and heat-treating the mixture at a temperature greater than or equal to a melting point of the fluorine-containing organic polymer, to allow the fluorine-containing organic polymer to permeate into the coating layer. The details of the production method will be described later.

### (Composite particles)

The matrix constituting each of the composite particles may be at least one of a silicon compound phase and a carbon phase. The silicon compound phase includes at least one of a silicon oxide phase and a silicate phase. The silicon oxide phase is constituted by a compound of Si and O. The compound of Si and O may be SiO₂. That is, the main component (e.g., 95 to 100 mass%) of the silicon oxide phase may be silicon dioxide. The silicate phase is constituted by a compound including a metallic element, silicon (Si), and oxygen (O). The metallic element is not particularly limited. However, when the silicate phase includes at least lithium, for example, the entry and exit of lithium ions into and from the silicate phase are facilitated. That is, the silicate phase preferably includes at least lithium silicate. Of the silicon oxide phase and the silicate phase, the silicate phase is preferred as the main main component because of its small irreversible capacity. Here, a "main component" refers to a component constituting 50 mass% or more of the total mass of the silicon compound phase, and the main component may constitute 70 mass% or more.

The lithium silicate is silicate including lithium (Li), silicon (Si), and oxygen (O). The atomic ratio O/Si of O to Si in the lithium silicate is, for example, greater than 2 and less than 4. An O/Si ratio greater than 2 and less than 4 (where z satisfies 0 < z < 2 in the formula described below) is advantageous in terms of the stability of the silicate phase and the lithium ion-conductivity. Preferably, the O/Si ratio is greater than 2 and less than 3. The atomic ratio Li/Si of Li to Si in the lithium silicate is, for example, greater than 0 and less than 4.

The composition of the lithium silicate can be represented by the formula: Li_{2z}SiO_{2+z} where 0 < z < 2. In terms of stability, ease of production, lithium ion conductivity, and the like, z preferably satisfies 0 < z < 1, and more preferably z = 1/2. Lithium silicate that satisfies z = 1/2 can be represented by Li₂Si₂O₅.

The silicate phase may further include another element M, in addition to Li, Si, and O. The inclusion of the element M in the silicate phase enhances the chemical stability and the lithium ion conductivity of the silicate phase, or suppresses a side reaction caused by contact between the silicate phase and a non-aqueous electrolyte.

As the element M, it is possible to use, for example, at least one selected from the group consisting of sodium (Na), potassium (K), calcium (Ca), magnesium (Mg), barium (Ba), zirconium (Zr), niobium (Nb), tantalum (Ta), vanadium (V), titanium (Ti), phosphorus (P), bismuth (Bi), zinc (Zn), tin (Sn), lead (Pb), antimony (Sb), cobalt (Co), fluorine (F), tungsten (W), aluminum (Al), boron (B) and rare-earth elements. In terms of the resistance to the non-aqueous electrolyte and the structural stability of the silicate phase, the element M preferably includes at least one selected from the group consisting of Zr, Ti, P, Al, and B.

The rare-earth element can improve the initial charge-discharge efficiency in charge-discharge cycles. The rare-earth element may be any of scandium (Sc), yttrium (Y), and lanthanoide elements. The rare-earth element preferably includes at least one selected from the group consisting of lanthanum (La), cerium (Ce), praseodymium (Pr), and neodymium (Nd). In terms of enhanced lithium ion-conductivity, it is particularly preferable that the rare-earth element includes La. The proportion of La in all rare-earth elements is preferably 90 atom% or more and 100 atom% or less.

By including an alkali metal element other than Li in the silicate phase, the silicate phase is less likely to be crystallized, has a low viscosity in a softened state, and thus has higher fluidity. Accordingly, in a heat-treating step, gaps between the silicon particles can be easily filled, so that dense composite particles are likely to be generated. As the alkali metal element, Na and/or K is preferable because of the low cost.

The silicate phase may include a Group II element such as Ca and Mg. In general, a silicate phase exhibits alkalinity, whereas a Group II element acts to suppress dissolution of an alkali metal from a silicate phase. Thus, the viscosity of the slurry is likely to be stabilized when preparing a slurry including the negative electrode active material. This also eliminates the need for treatment (e.g., acid treatment) for neutralizing the alkali component of the silicate composite particles. In particular, Ca is preferred in that the Vickers hardness of the silicate phase may be improved, thus further enhancing the cycle characteristics.

As another element M other than the alkali metal element and the Group II element, for example, B has a low melting point and is advantageous in enhancing the fluidity during sintering. Al, Zr, and La may improve the hardness while retaining the ion conductivity. Zr, Ti, P, Al, and B act to increase the resistance to the non-aqueous electrolyte, and the structural stability of the silicate phase.

The silicate phase may further include a trace amount of elements such as iron (Fe), chromium (Cr), nickel (Ni), manganese (Mn), copper (Cu), and molybdenum (Mo).

The element M may form a compound. Depending on the type of the element M, the aforementioned compound may be, for example, a silicate of the element M, or an oxide of the element M.

In the silicate phase, the content of the element M is, for example, 1 mol% or more and 40 mol% or less, relative to the total amount of the elements other than oxygen.

The contents of Li, Si, and the element M in the silicate phase may be measured by, for example, by analyzing a cross section of the negative electrode mixture layer.

First, a battery in a full discharge state is disassembled, to take out a negative electrode, and the negative electrode is washed with anhydrous ethyl methyl carbonate or dimethyl carbonate, to remove a non-aqueous electrolyte component. After drying, a cross section of a negative electrode mixture layer is obtained using a cross section polisher (CP). Next, the cross section of the negative electrode mixture layer is observed with a scanning electron microscope (SEM).

Then, the contents of the elements can be determined using any of the following methods. In addition, the composition of the silicate phase is calculated from the contents of the elements.

### <EDX>

From a cross-sectional backscattered electron image of the negative electrode mixture layer, 10 silicate composite particles having a maximum diameter of 5 µm or more are randomly selected, and each of the particles is subjected to elementary mapping analysis using energy-dispersive X-ray (EDX). The area ratio of an element to be analyzed is calculated using image analysis software. The observation magnification is preferably 2000 to 20000X. The measured values of the area ratio of a predetermined element contained in the 10 particles are averaged. From the obtained average value, the content of the element to be analyzed is calculated.

Desirable measurement conditions for SEM-EDX analysis will be described below.

### <SEM-EDX measurement conditions>

Processing apparatus: SM-09010 (Cross Section Polisher) manufactured by JEOL
Processing condition: acceleration voltage 6 kV
Current value: 140 µA
Degree of vacuum: 1 × 10⁻³ to 2 × 10⁻³Pa
Measurement apparatus: electron microscope SU-70 manufactured by HITACHI
Acceleration voltage during analysis: 10 kV
Field: free mode
Probe current mode: Medium
Probe current range: High
Anode Ap.: 3
OBJAp.:2
Analysis area: 1 µm square
Analysis software: EDAX Genesis
CPS: 20500
Lsec: 50
Time constant: 3.2

### <AES>

From a cross-sectional backscattered electron image of the negative electrode mixture layer, 10 silicate composite particles having a maximum diameter of 5 µm or more are randomly selected, and each of the particles is subjected to elementary qualitative and quantitative analysis using an Auger electron spectroscopy (AES) analyzer (e.g., JAMP-9510F manufactured by JEOL Ltd.). As the measurement conditions, for example, an acceleration voltage of 10 kV, a beam current of 10 nA, and an an analysis region of 20 µmφ may be set. The content of a predetermined element is calculated by averaging the amounts of the element contained in the 10 particles.

Note that in the course of charging and discharging, a coating is formed on the surface of each of the silicate composite particles, for example, through decomposition of the electrolyte. As will be described below, each of the silicate composite particle may further include a conductive layer coating the surface of the composite particle. Accordingly, mapping analysis using EDX or AES is performed for a range located 1 µm inward of a peripheral edge of the cross section of the silicate composite particle such that a thin coating and the conductive layer are not included in the measurement range. Through mapping analysis, it is also possible to confirm the state of dispersion of the carbon material inside the composite particle. In the last stage of cycling, the samples become difficult to be distinguished from decomposition products of the electrolyte, and it is therefore preferable to measure the samples before being subjected to cycling or in the initial stage of cycling.

### <ICP>

Each of the samples of the silicate composite particles is fully dissolved in a heated acid solution (acid mixture of hydrofluoric acid, nitric acid, and sulfuric acid), and the carbon in the solution residue is removed by filtration. Thereafter, the resulting filtrate is analyzed by inductively-coupled plasma emission spectrometry (ICP), to determine spectral intensities of the elements. Subsequently, a calibration curve is formed using commercially available standard solutions of elements, and the content of each of the elements in the Si-containing particles is calculated.

The contents of B, Na, K, and Al in the silicate phase can be quantitatively analyzed in accordance with JIS R3105 (1995) (Methods for chemical analysis of borosilicate glasses).

Although the silicate phase and the silicon particles are present in each of the silicate composite particles, these can be separately quantitatively determined by using Si-NMR. The Si content obtained by the above-described method is the sum of the amount of Si constituting the silicon particles, and the amount of Si in the silicate phase (and the amount of Si constituting the silicon oxide). Using the results of the quantitative analysis using Si-NMR, the amount of the Si element contained in each of the silicate composite particles is distributed to the silicon particles, the silicon oxide phase, and the silicate phase. Note that as the standard substance required for the quantitative determination, a mixture containing silicon particles, a silicon oxide phase, and a silicate phase with known Si contents in a predetermined ratio may be used.

Desirable measurement conditions for Si-NMR will be described below.

### <Si-NMR measurement conditions>

Measurement apparatus: solid-state nuclear magnetic resonance spectrometer (INOVA-400) manufactured by Varian Inc.
Probe: Varian 7 mm CPMAS-2
MAS: 4.2 kHz
MAS rate: 4 kHz
Pulse: DD (45° pulse + signal acquisition time 1H decoupling)
Repetition time: 1200 sec to 3000 sec
Observation width: 100 kHz
Center of observation: approximately -100 ppm
Signal acquisition time: 0.05 sec
Number of times of integrations: 560
Sample amount: 207.6 mg

To achieve an increased capacity and enhanced cycle characteristics, the content of the silicon particles in each of the silicate composite particles may be, for example, 30 mass% or more and 80 mass% or less. By setting the content of the silicon particles to 30 mass% or more, the proportion of the silicate phase is reduced, and thus the initial charge-discharge efficiency is likely to be improved. By setting the content of the silicon particles to 80 mass% or less, the degree of expansion and contraction of the silicate composite particles during charging and discharging can be more easily reduced. The content of the silicon particles in each of the silicate composite particles is preferably 40 mass% or more, and more preferably 50 mass% or more.

The silicon particles dispersed in the silicate phase have a particulate phase of a simple substance of silicon (Si), and is constituted by a single crystallite or a plurality of crystallites. The crystallite size of the silicon particles is preferably 50 nm or less. When the crystallite size of the silicon particles is 50 nm or less, the amount of volume change caused by expansion and contraction of the silicon particles associated with charging and discharging can be reduced, so that the cycle characteristics can be further enhanced. For example, isolation of silicon particles, which may result from reduced contact points between the silicon particles and the surroundings due to voids formed around the silicon particles during contraction of the silicon particles, can be suppressed, and a reduction in charge-discharge efficiency due to such isolation of the particles can be suppressed. The lower limit of the crystallite size of the silicon particles is not particularly limited, and is, for example, 2 nm.

The crystallite size of the silicon particles is more preferably 5 nm or more, 30 nm or less, and further preferably 5 nm or more and 20 nm or less. When the crystallite size of the silicon particles is 20 nm or less, the expansion and contraction of the silicon particles can be made uniform, and the cycle characteristics can be enhanced by reducing microcracks of particles generated by expansion and contraction of the silicon particles during charging and discharging. The crystallite size of the silicon particles is calculated from the half-width of a diffraction peak attributed to the Si (111) plane in an X-ray diffraction (XRD) pattern of the silicon particles, using the Scherrer equation.

The silicate composite particles can be taken out from a battery by the following method. First, the battery is disassembled, to take out a negative electrode, and the negative electrode is washed with anhydrous ethyl methyl carbonate or dimethyl carbonate, to remove an electrolytic solution. Next, a negative electrode mixture is stripped off from copper foil, and the negative electrode mixture is pulverized in a mortar, to obtain a sample powder. Next, the sample power is dried in a dry atmosphere for one hour, and then immersed in lightly boiled 6M hydrochloric acid for 10 minutes, to remove any alkali metal, such as Na and Li, which may be contained in a binder and the like. Next, the sample powder is washed with ion exchanged water, filtered, and dried for one hour at 200°C. Thereafter, in an oxygen atmosphere, the sample powder was heated to 900°C to remove the carbon component, whereby silicate composite particles alone can be isolated.

Next, an example of a method for producing the silicate composite particles will be described in detail.

### Process (i) (process of obtaining lithium silicate)

As a raw material of lithium silicate, a raw material mixture including a Si-containing raw material and a Li raw material in a predetermined ratio is used. The above-described element M may be included in the raw material mixture. A mixture obtained by mixing predetermined amounts of the aforementioned raw materials is dissolved, and the resulting melt is passed between metal rolls so as to be formed into flakes, to produce lithium silicate. Thereafter, the silicate in the form of flakes is crystalized by being heat-treated in an atmospheric air at a temperature greater than or equal to a glass transition point, and less than or equal to a melting point temperature. Note that the silicate in the form of flakes can also be used without being crystalized. The mixture of predetermined amounts of the raw materials can also be fired at a temperature less than or equal to a melting point, without dissolving the mixture, to produce the silicate by a solid-phase reaction.

Silicon oxide can be used as the Si raw material. For example, lithium carbonate, lithium oxide, lithium hydroxide, lithium hydride, and the like can be used as the Li raw material. These may be used alone or in combination of two or more thereof. Examples of the raw material of the element M include oxides, hydroxides, carbonic acid compounds, hydrides, nitrates, sulfates, and the like of the elements.

The Si raw material that has not reacted with the Li raw material may remain in the lithium silicate. The remaining Si raw material is dispersed in the lithium silicate as fine crystals of silicon oxide.

### Process (ii) (process of obtaining silicate composite particles)

Next, compounding is performed by blending a silicon raw material with the lithium silicate. For example, composite particles are produced through the following steps (a) to (c).

### Step (a)

First, a silicon raw material powder and a lithium silicate powder are mixed in a mass ratio of 20:80 to 95:5. For the silicon raw material, silicon coarse particles having an average particle diameter of several to several tens of micrometers may be used.

### Step (b)

Next, using a pulverizing apparatus such as a ball mill, the mixture of the silicon raw material and the lithium silicate is pulverized and compounded, while micronizing the mixture. At this time, wet pulverization may be performed by adding an organic solvent to the mixture. A predetermined amount of the organic solvent may be charged into a pulverization container at a time in the initial stage of the pulverization. Alternatively, a predetermined amount of the organic solvent may be intermittently charged into a pulverization container multiple times in the course of the pulverization. The organic solvent serves to prevent an obj ect to be pulverized from adhering to the inner wall of the pulverization container.

As the organic solvent, it is possible to use alcohols, ethers, fatty acids, alkanes, cycloalkanes, silicates, metal alkoxides, and the like.

For the silicon raw material, silicon coarse particles having an average particle diameter of several to several tens of micrometers may be used. Preferably, the crystallite size of the resulting final silicon particles is controlled such that the crystallite size calculated from the half-width of a diffraction peak attributed to the Si (111) plane in an X-ray diffraction pattern using the Scherrer equation is 5 nm or more and 50 nm or less.

Note that the silicon raw material and the lithium silicate may be mixed after being separately micronized. Also, silicon nanoparticles and amorphous lithium silicate nanoparticles may be produced without using a pulverizing apparatus, and these nanoparticles may be mixed. For the production of the nanoparticles, a known method such as a gas phase method (e.g., plasma method) and a liquid phase method (e.g., liquid phase reduction method) may be used.

### Step (c)

Next, the pulverized material is fired while applying a pressure thereto by hot pressing or the like, to obtain a sintered body. Firing is performed, for example, in an inert atmosphere (e.g., an atmosphere such as argon, nitrogen, etc.). The firing temperature is preferably 450°C or more and 1000°C or less. When the firing temperature is in the aforementioned range, fine silicon particles can be easily dispersed in a silicate phase having low crystallinity. During sintering, the lithium silicate is softened, and flows so as to fill the gaps between the silicon particles. As a result, a dense block-shaped sintered body containing the silicate phase as a sea portion, and the silicon particles as island portions can be obtained. The firing temperature is preferably 550°C or more and 900°C or less, and more preferably 650°C or more and 850°C or less. The firing time is, for example, 1 hour or more and 10 hours or less.

Pulverizing the obtained sintered body provides silicate composite particles. By appropriately selecting the pulverizing conditions, silicate composite particles having a predetermined average particle diameter can be obtained.

Through the processes (i) and (ii), composite particles including a silicate phase as a matrix, and a silicon phase dispersed in the matrix are obtained.

### Process (iii) (process of coating surface of each silicate composite particle with carbon material)

Next, at least part of the surface of each of the silicate composite particles is coated with a carbon material, to form a conductive layer. As the carbon material, for example, coal pitch or coal tar pitch, petroleum pitch, phenol resin, and the like may be used. A coating layer covering at least part of the surface of each of the composite particles is formed by mixing the raw material of the conductive material with the composite particles, and firing the mixture to carbonize the raw material of the conductive material.

Firing of the mixture of the raw material of the carbon material and the composite particles is performed, for example, in an inert atmosphere (e.g., an atmosphere such as argon, nitrogen, etc.). The firing temperature is preferably 450°C or more and 1000°C or less. When the firing temperature is in the aforementioned range, a conductive layer having high conductivity can be easily formed in the silicate phase having low crystallinity. The firing temperature is preferably 550°C or more and 900°C or less, and more preferably 650°C or more and 850°C or less. The firing time is, for example, 1 hour or more and 10 hours or less.

The coating layer may be formed on each of the composite particles using other methods. For example, the coating layer may be formed by allowing hydrocarbon gas to react on the surfaces of the Si-containing particles by a gas phase method such as a CVD method. Acetylene, methane, and the like may be used as the hydrocarbon gas. Also, the coating layer may be formed by mixing carbon black with the composite particles, and allowing a precursor to adhere to the surface of each of the composite particles, followed by firing the precursor together with the composite particles.

### Process (iv)

Subsequently, the composite particles are mixed with a powder of a fluorine-containing organic polymer, to obtain a mixture. Thereafter, the mixture is heat-treated at a temperature that is greater than or equal to the melting point of the fluorine-containing organic polymer, and is less than or equal to the decomposition temperature of the fluorine-containing organic polymer, to allow the fluorine-containing organic polymer to diffuse and permeate into the coating layer. Thus, a coating layer constituted by a mixture of the carbon material and the fluorine-containing material is formed. When polyvinylidene fluoride (PVdF) is used as the fluorine-containing organic polymer, the heat treatment temperature may be greater than or equal to the melting point (150°C to 170°C) of PVdF and less than or equal to 340°C, which is the decomposition temperature of PVdF, and is, for example, preferably 200°C to 250°C. The heat treatment may be performed in an inert gas atmosphere. The heat treatment time may be about 1 to 3 hours, for example. Cracking the heat-treated mixture provides composite particles with the coating layers constituted by a mixture of the carbon material and the fluorine-containing material formed thereon. Through the heat treatment, polyvinylidene fluoride undergoes polyenization, as a result of which some of -CH₂-CF₂-structures may be changed to -CH=CF-structures.

When the particle diameter of the fluorine-containing organic polymer in the mixture is too large, the surfaces of the composite particles (coating layers) cannot be uniformly covered with the liquefied fluorine-containing organic polymer by the heat treatment, so that the fluorine-containing organic polymer may form aggregates. The particle diameter of the fluorine-containing organic polymer is preferably smaller than the particle diameters of the composite particles such that the surfaces of the composite particles (coating layers) are uniformly covered with the liquefied fluorine-containing organic polymer. Here, a particle diameter means a particle diameter (volume average particle diameter) with which an accumulated volume value is 50% in a particle size distribution measured by laser diffraction/scattering. The volume average particle diameter of the fluorine-containing organic polymer is, for example, preferably 1 to 100 µm, and more preferably 1 to 10 µm.

In the coating layer, the mass proportion of the fluorine-containing organic polymer (including no carbon material) to be mixed when obtaining a mixture, to the composite particles is preferably smaller than the mass proportion of the carbon material to the composite particles when coating the composite particles with the carbon material, from the viewpoint of suppressing the reduction in conductivity caused by addition of the fluorine-containing organic polymer.

A process of washing the composite particles with acid may be performed. For example, by washing the composite particles with an acidic aqueous solution, it is possible to remove a trace amount of an alkali component, which may be produced when compounding the silicon raw material and the lithium silicate, present on the surfaces of the composite particles. As the acidic aqueous solution, it is possible to use an aqueous solution of an inorganic acid such as hydrochloric acid, hydrofluoric acid, sulfuric acid, nitric acid, phosphoric acid, and carbonic acid, or an aqueous solution of an organic acid such as citric acid and acetic acid.

The composite particles may be composite particles including silicon oxide represented by the formula SiOx where 0.5 ≤ X <1.6. Such composite particles have a silicon oxide phase in the matrix. The average particle diameter of such composite particles may be in the range from 1 µm to 25 µm (e.g., in the range from 4 µm to 15 µm).

The composite particles may be composite particles each including a carbon phase, and silicon phase (silicon particles) dispersed in the carbon phase. Since the carbon phase has conductivity, even when voids are formed around such composite particles, the contact points between the composite particles and the surroundings are likely to be maintained. As a result, the capacity reduction caused by repeated charge-discharge cycles is likely to be suppressed. The carbon phase may be constituted by shapeless carbon (i.e., amorphous carbon). The shapeless carbon may be hard carbon, soft carbon, or others. The shapeless carbon (amorphous carbon), in general, refers to a carbon material having an average interplanar spacing d₀₀₂ of the (002) plane of exceeding 0.34 nm, as measured by an X-ray diffractometry.

The average particle diameter of the composite particles including the carbon phase may be 3 µm or more and 18 µm or less, 6 µm or more and 15 µm or less, or 8 µm or more and 12 µm or less. The content of the silicon phase (silicon particles) in each of the composite particles including the carbon phase may be 30 mass% or more and 80 mass% or less, or 40 mass% or more and 70 mass% or less. With such ranges, a sufficient increase in the capacity of the negative electrode is achieved, and the cycle characteristics are likely to be enhanced.

For the above-described SiOx composite particles or composite particles each including a carbon phase as a matrix, the cycle characteristics when using these composite particles as the negative electrode active material can also be enhanced by forming coating layers each constituted by a mixture of a carbon material and a fluorine-containing material. The formation of the coating layers may be performed in the same manner as in the above-described processes (iii) and (iv).

The average particle diameter of the composite particles may be measured by observing, with a SEM or TEM, a cross section of the negative electrode active material layer of a secondary battery that has been disassembled to take out a negative electrode. In that case, the average particle diameter is determined by arithmetically averaging the maximum diameters of 100 arbitrarily selected particles. As the average particle diameter of the composite particles before forming the negative electrode active material layer, a median diameter (D50) at a cumulative volume of 50% in a volume-based particle size distribution can be used. The median diameter can be determined using a laser diffraction/scattering particle size distribution measurement device, for example.

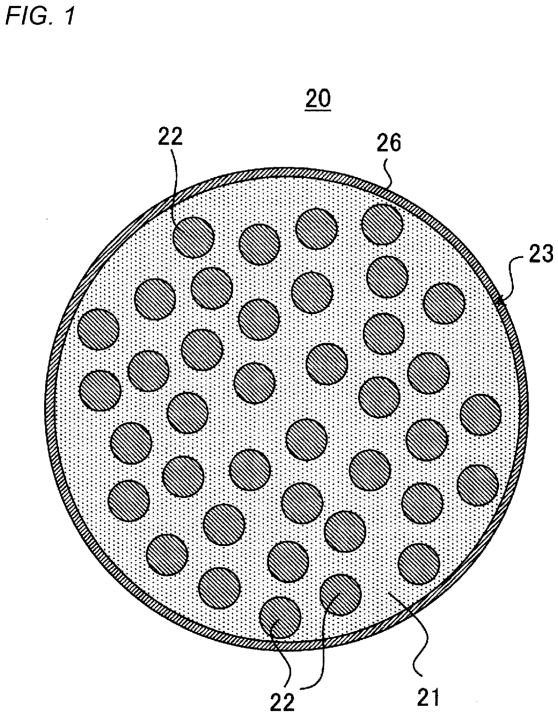

FIG. 1 schematically shows a cross section of a silicate composite particle 20 as an example of the negative electrode active material. Abase particle 23 includes a lithium silicate phase 21, and a silicon phase (silicon particles) 22 dispersed in the silicate phase 21. The base particle 23 has an island-in-the-sea structure in which a fine silicon phase is dispersed in a matrix of the lithium silicate phase 21. The surface of the base particle 23 is coated with a coating layer 26, to form a silicate composite particle 20.

The base particle 23 may include another constituent in addition to the lithium silicate phase 21, the silicon phase 22, a silicon oxide phase, and the coating layer.

The average particle diameter of the silicon particles 22, before initial charging, is 500 nm or less, preferably 200 nm or less, and more preferably 50 nm or less. By appropriately refining the silicon particles 22 in this manner, the volume change during charging and discharging is reduced, which enhances the structural stability. Also, the cycle characteristics are enhanced as a result of expansion and contraction of the silicon particles being made uniform, and cracking of the particles being suppressed. The average particle diameter of the silicon particles 22 is measured by observing a cross section of the negative electrode material using a SEM or a TEM. Specifically, the average particle diameter is determined by averaging the maximum diameters of arbitrarily selected 100 silicon particles 22.

A secondary battery according to an embodiment of the present disclosure includes a positive electrode, a negative electrode, an electrolyte, and a separator interposed between the positive electrode and the negative electrode. The negative electrode includes a current collector, and a negative electrode active material layer including the above-described negative electrode active material for a secondary battery. The secondary battery may be a non-aqueous electrolyte secondary battery. In the following, the negative electrode, the positive electrode, the electrolyte, and the separator included in the secondary battery according to an embodiment of the present invention will be described.

### [Negative electrode]

The negative electrode includes, for example, a negative electrode current collector, and a negative electrode mixture layer formed on the surface of the negative electrode current collector and including a negative electrode active material. The negative electrode mixture layer can be formed by applying, to the surface of the negative electrode current collector, a negative electrode slurry in which the negative electrode mixture is dispersed in a dispersing medium, and drying the slurry. The coated film obtained after drying may be rolled, as necessary. The negative electrode mixture layer may be formed on one side of the negative electrode current collector, or may be formed on both sides thereof.

The negative electrode mixture contains, as the negative electrode active material, a negative electrode active material for a secondary battery containing the above-described silicate composite particles as an essential component, and may contain a binder, a conductive agent, a thickener, and the like as optional components. The silicon particles contained in the silicate composite particles can absorb a large amount of lithium ions, and thus contribute to an increased capacity of the negative electrode.

The negative electrode active material may further include another active material ingredient that electrochemically absorbs and desorb lithium ions. For example, a carbon-based active material is preferred as another active material ingredient. The silicate composite particles undergo volume expansion and contraction associated with charging and discharging, and, therefore, when the ratio thereof in the negative electrode active material increases, a contact failure between the negative electrode active material and the negative electrode current collector is likely to occur due to charging and discharging. On the other hand, by using the silicate composite particles and the carbon-based active material in combination, it is possible to achieve excellent cycle characteristics, while providing the negative electrode with the high capacity of the silicon particles. The proportion of the silicate composite particles relative to the total amount of the silicate composite particles and the carbon-based active material is, for example, preferably 0.5 to 15 mass%, and more preferably 1 to 5 mass%. This makes it possible to more easily achieve both an increased capacity and enhanced improved cycle characteristics.

Examples of the carbon-based active material include graphite, graphitizable carbon (soft carbon), and non-graphitizable carbon (hard carbon). Among these, graphite is preferred because of exhibiting excellent stability during charging and discharging and also having a small irreversible capacity. Graphite means a material having a graphite crystal structure, and includes, for example, natural graphite, artificial graphite, and graphitized mesophase carbon particles. The carbon-based active materials may be used alone or in combination of two or more thereof.

A non-porous conductive substrate (metal foil, etc.) or a porous conductive substrate (a mesh structure, a net structure, a punched sheet, etc.) is used as the negative electrode current collector. Examples of the material of the negative electrode current collector include stainless steel, nickel, a nickel alloy, copper, and a copper alloy. The thickness of the negative electrode current collector is, but is not particularly limited to, preferably 1 to 50 µm, and more preferably 5 to 20 µm, from the viewpoint of the balance between the strength and the weight reduction of the negative electrode.

Examples of the binder include fluorocarbon resins, polyolefin resins, polyamide resins, polyimide resins, vinyl resins, styrene-butadiene copolymer rubber (SBR), polyacrylic acids, and derivatives thereof. These may be used alone or in combination of two or more thereof. Examples of the conductive agent include carbon black, conductive fibers, carbon fluoride, and organic conductive materials. These may be used alone or in combination of two or more thereof. Examples of the thickener include carboxymethyl cellulose (CMC) and polyvinyl alcohol. These may be used alone or in combination of two or more thereof.

Examples of the dispersing medium include water, alcohols, ethers, N-methyl-2-pyrrolidone (NMP), and solvent mixtures thereof.

### [Positive electrode]

The positive electrode includes, for example, a positive electrode current collector, and a positive electrode mixture layer formed on the surface of the positive electrode current collector. The positive electrode mixture layer can be formed by applying to the surface of the positive electrode current collector, a positive electrode slurry in which the positive electrode mixture is dispersed in a dispersing medium, and drying the slurry. The coated film obtained after drying may be rolled, as necessary. The positive electrode mixture layer may be formed on one side of the positive electrode current collector, or may be formed on both sides thereof.

The positive electrode mixture includes a positive electrode active material as an essential component, and may include a binder, a conductive agent, and the like as optional components.

A lithium composite metal oxide can be used as the positive electrode active material. Examples of the lithium composite metal oxide include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O_{4,}LiMePO₄, and Li₂MePO₄F. Here, M is at least one selected from the group consisting of Na, Mg, Sc, Y, Mn, Fe, Co, Ni, Cu, Zn, Al, Cr, Pb, Sb, and B. Me includes at least a transition element (e.g., at least one selected from the group consisting of Mn, Fe, Co, and Ni). Here, 0 ≤ a ≤ 1.2, 0 ≤ b ≤ 0.9, and 2.0 ≤ c ≤ 2.3. Note that the value a, which represents the molar ratio of lithium, increases or decreases through charge-discharge.

As the binder and the conductive agent, those given as examples for the negative electrode can be used. As the conductive agent, graphite such as natural graphite or artificial graphite may also be used.

The shape and the thickness of the positive electrode current collector can be respectively selected from the shapes and the ranges corresponding to the negative electrode current collector. Examples of the material of the positive electrode current collector include stainless steel, aluminum, an aluminum alloy, and titanium.

### [Electrolyte]

The electrolyte contains a solvent, and a lithium salt dissolved in the solvent. The concentration of the lithium salt in the electrolyte is, for example, 0.5 to 2 mol/L. The electrolyte may contain a known additive.

An aqueous solvent or a non-aqueous solvent is used as the solvent. For example, a cyclic carbonic acid ester, a chain carbonic acid ester, a cyclic carboxylic acid ester, and the like can be used as the non-aqueous solvent. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). The non-aqueous solvents may be used alone or in combination of two or more thereof.

As the lithium salt, it is possible to use, for example, lithium salts of chlorine-containing acid (LiClO₄, LiAlCl₄, LiB₁₀Cl₁₀, etc.), lithium salts of fluorine-containing acid (LiPF₆, LiBF₄, LiSbF₆, LiAsF₆, LiCF₃SO₃, LiCF₃CO₂, etc.), lithium salts of fluorine-containing acid imide (LiN(CF₃SO₂)₂, LiN(CF₃SO₂)(C₄F₉SO₂), LiN(C₂F₅SO₂)₂, etc.), lithium halides (LiCl, LiBr, LiI, etc.), and the like. The lithium salts may be used alone or in combination of two or more thereof.

### [Separator]

Usually, it is desirable that a separator be interposed between the positive electrode and the negative electrode. The separator has a high ion permeability, as well as appropriate mechanical strength and insulating properties. As the separator, it is possible to use a microporous thin film, a woven fabric, a non-woven fabric, and the like. For example, polyolefins such as polypropylene and polyethylene may be used as the material of the separator.

Examples of the structure of the secondary battery include a structure in which an electrode group formed by winding a positive electrode and a negative electrode with a separator interposed therebetween, and a non-aqueous electrolyte are housed in an outer member. Alternatively, an electrode group having another configuration, such as a stacked electrode group formed by stacking a positive electrode and a negative electrode with a separator interposed therebetween, may be used in place of the wound electrode group. The secondary battery may have any configuration, including, for example, a cylindrical configuration, a prismatic configuration, a coin configuration, a button configuration, and a laminated configuration.

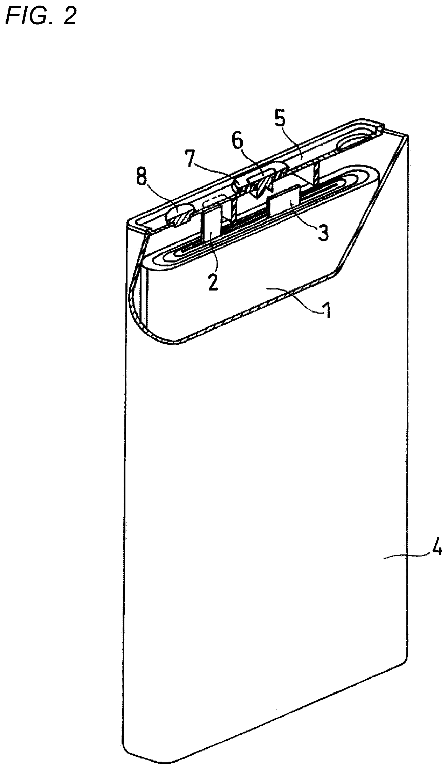

FIG. 2 is a partially cut-away schematic perspective view of a prismatic secondary battery according to an embodiment of the present invention.

The battery includes a bottomed prismatic battery case 4, an electrode group 1 and an electrolyte (not shown) that are housed in the battery case 4, and a sealing plate 5 that seals the opening of the battery case 4. The electrode group 1 includes a long strip-shaped negative electrode, a long strip-shaped positive electrode, and a separator interposed therebetween. The electrode group 1 is formed by winding the negative electrode, the positive electrode, and the separator around a flat plate-shaped winding core, and pulling out the winding core. The sealing plate 5 has a liquid injection port closed by a sealing plug 8, and a negative electrode terminal 6 insulated from the sealing plate 5 by a gasket 7.

An end of a negative electrode lead 3 is attached to a negative electrode current collector of the negative electrode through welding or the like. An end of a positive electrode lead 2 is attached to a positive electrode current collector of the positive electrode through welding or the like. The other end of the negative electrode lead 3 is electrically connected to the negative electrode terminal 6. The other end of the positive electrode lead 2 is electrically connected to the sealing plate 5. A resin frame body that separates the electrode group 1 and the sealing plate 5 from each other and also separates the negative electrode lead 3 and the battery case 4 from each other is disposed at an upper portion of the electrode group 1.

### [Examples]

Hereinafter, the present invention will be specifically described by way of examples and comparative examples. However, the present invention is not limited to the following examples.

### <Example 1>

### [Preparation of silicate composite particles]

Lithium carbonate (Li₂CO₃) as a Li raw material and silicon dioxide (SiO₂) as a Si raw material were mixed in a predetermined molar ratio, and the mixture was fired in an inert gas atmosphere at 800°C for 10 hours, to obtain lithium silicate. The obtained lithium silicate was pulverized so as to have an average particle diameter of 10 µm.

The lithium silicate having an average particle diameter of 10 µm and the silicon raw material (3N, average particle diameter 10 µm) were mixed in a mass ratio of 42:58.

The mixture was charged into a pot (made of SUS, volume: 500 mL) of a planetary ball mill (P-5 manufactured by Fritsch Co., Ltd.). Then, 24 SUS balls (diameter 20 mm) were placed in the pot, and with the lid closed, the mixture was pulverized in an inert atmosphere at 200 rpm for 25 hours.

Next, the mixture in the form of powder was taken out in the inert atmosphere, and fired at 600°C for 4 hours, with pressure applied thereto using a hot pressing machine in the inert atmosphere, thus obtaining a sintered body of the mixture. The obtained sintered body was pulverized, and passed through a 40 µm mesh, to obtain silicate composite particles.

After mixing 100 parts by mass of the silicate composite particles and 3 parts by mass of coal tar pitch, the mixture was fired in an argon atmosphere at 800°C, to form a conductive layer (coating layer) covering at least part of the surfaces of the composite particles. Through firing, the coal tar pitch was converted into amorphous carbon. The mass proportion of the conductive layer to the total mass of the silicate composite particles and the conductive layer was 3 mass%.

Subsequently, the silicate composite particles and polyvinylidene fluoride (PVdF) (average particle diameter (D50) 5 µm) were mixed in a mixing ratio of 1 part by mass of PVdF per 100 parts by mass of the silicate composite particles before forming the conductive layers thereon, and the mixture was heat-treated in an inert gas atmosphere at 200°C for 2 hours. Thereafter, using a sieve, silicate composite particles having an average particle diameter of 10 µm and including the coating layers constituted by a mixture of the carbon material and the fluorine-containing material were obtained.

The silicate composite particles were subjected to SEM-EDX analysis, to measure a distribution of the fluorine atoms in the coating layer. As a result, when A represents the fluorine content in the coating layer surface in a region in which a coating layer having a thickness of 50 nm was formed, a fluorine content B at a depth of 25 nm, corresponding to half the thickness of the coating layer, from the surface was about 0.5 times as large as A.

### [Production of negative electrode]

The silicate composite particles and graphite were mixed in a mass ratio of 5:95, and the mixture was used as a negative electrode active material. Water was added to a negative electrode mixture containing the negative electrode active material, carboxymethyl cellulose sodium (CMC-Na), and styrene-butadiene rubber (SBR) in a mass ratio of 97.5:1:1.5, and the mixture was stirred, to prepare a negative electrode slurry. Next, the negative electrode slurry was applied onto copper foil such that the mass of the negative electrode material mixture per m² of the copper foil was 190 g, and the coated film was dried, followed by rolling, to produce a negative electrode with a negative electrode mixture layer having a density of 1.5 g/cm³ formed on both sides of the copper foil.

### [Production of positive electrode]

N-methyl-2-pyrrolidone (NMP) was added to a positive electrode mixture containing LiNi_{0.88}Co_{0.09}Al_{0.03}O₂, acetylene black, and polyvinylidene fluoride (PVdF) in a mass ratio of 95:2.5:2.5, and the mixture was stirred, to prepare a positive electrode slurry. Next, the positive electrode slurry was applied onto aluminum foil, and the coated film was dried, followed by rolling, to produce a positive electrode with a positive electrode mixture layer having a density of 3.6 g/cm³ formed on both sides of the aluminum foil.

### [Preparation of electrolytic solution]

In a solvent mixture containing ethylene carbonate (EC) and diethyl carbonate (DEC) in a volume ratio of 3:7, LiPF₆ was dissolved at a concentration of 1.0 mol/L, to prepare a non-aqueous electrolytic solution.

### [Production of secondary battery]

The positive electrode and the negative electrode, with a tab was attached to each of the electrodes, were spirally wound with a separator interposed therebetween such that the tabs were located at the outermost periphery, to produce an electrode group. The electrode group was inserted into an outer member made of an aluminum laminate film, and vacuum dried at 105°C for 2 hours. Thereafter, a non-aqueous electrolytic solution was injected into the outer member, and the opening of the outer member was sealed, to obtain a secondary battery (non-aqueous electrolyte secondary battery) A1.

### <Examples 2 to 4>

In preparation of the silicate composite particles, the mixing ratio of PVdF when mixing the silicate composite particles and PVdF was changed to 2 parts by mass, 5 parts by mass, or 10 parts by mass, per 100 parts by mass of the silicate composite particles before forming the coating layers thereon. Except for this, secondary batteries (non-aqueous electrolyte secondary batteries) A2 to A4 were obtained in the same manner as in Example 1.

### <Comparative Example 1 >

In preparation of the silicate composite particles, silicate composite particles each having formed thereon an amorphous carbon conductive layer (coating layer), without mixing the silicate composite particles and PVdF, were used as the negative electrode active material. Except for this, a secondary battery (non-aqueous electrolyte secondary battery) B1 of a comparative example was obtained in the same manner as in Example 1.

The secondary batteries A1 to A4, and B1 were evaluated as follows.

### (1) Charge-discharge cycle test

For each of the batteries, charging and discharging were repeatedly performed under the following conditions.

### <Charging>

At 25°C, constant-current charging was performed at a current of 1 It (800 mA) until the voltage reached 4.2 V, followed by constant-voltage charging at a constant voltage of 4.2 V until the current reached 1/20 lt (40 mA).

### <Discharging>

At 25°C, constant-current discharging was performed at a current of 1 It (800 mA) until the voltage reached 2.75 V

The rest period between charging and discharging was 10 minutes. A charge capacity C₀ and a discharge capacity C₁ at the 1st cycle were determined for each of the batteries, and the rate represented by 100 × C₁/C₀ (%) was determined as an initial efficiency. In addition, a discharge capacity C300 at the 300th cycle was determined for each of the batteries, and the rate represented by 100 ×C₃₀₀/C₁ (%) was determined as a capacity retention rate.

The evaluation results for the secondary batteries A1 to A4 and B1 are shown in Table 1. Table 1 also shows the constitution of the coating layer (the contents of the carbon material and the fluorine-containing material in the coating layer) of the silicate composite particles used as the negative electrode active material of each of the batteries. In Table 1, each of the contents of the carbon material and the fluorine-containing material is shown as parts by mass per 100 parts by mass of silicate composite particles including no coating layer.

**[Table 1]**

| Battery | Content (parts by mass per 100 parts by mass of silicate composite particle) in coating layer | | Capacity retention rate (%) | Initial efficiency (%) |
|---|---|---|---|---|
| | Carbon material | Fluorine-containing material | | |
| A1 | 3 | 1 | 81.9 | 88.1 |
| A2 | 3 | 2 | 82.3 | 88.0 |
| A3 | 3 | 5 | 79.9 | 87.7 |
| A4 | 3 | 10 | 79.9 | 87.7 |
| B1 | 3 | - | 70.3 | 88.1 |

Table 1 indicates that the secondary batteries A1 to A4, which had coating layers constituted by a mixture of a carbon material and a fluorine-containing material formed on the silicate composite particles, achieved a significantly higher capacity retention rate than that of the secondary battery B1, which had coating layers composed only of a carbon material formed on the silicate composite particles.

In the case of the secondary batteries A3 and A4, in each of which the content of the fluorine-containing material was larger than the content of the carbon material in the coating layer, the capacity retention rates were significantly higher than that of battery B1, but were lower than those of the batteries A1 and A2. In addition, their initial efficiencies were slightly lower than that of the battery B1. This is presumably because the increased content of the fluorine-containing material resulted in a reduction in the conductivity of the coating layer.

### [Industrial Applicability]

The present invention can provide a non-aqueous electrolyte secondary battery having favorable charge-discharge cycle characteristics. The non-aqueous electrolyte secondary battery according to the present invention is useful as a main power source for mobile communication devices, mobile electronic device, and the like.

### [Reference Signs List]

1: electrode group, 2: positive electrode lead, 3: negative electrode lead, 4: battery case, 5: sealing plate, 6: negative electrode terminal, 7: gasket, 8: sealing plug, 20: silicate composite particle, 21: lithium silicate phase, 22: silicon phase, 23: base particle, 26: coating layer

## Claims

1. A negative electrode active material for a secondary battery, comprising
composite particles each including a matrix, and a silicon phase dispersed in the matrix,
wherein each of the composite particles is coated with a coating layer, and
the coating layer is a mixture of a carbon material and a fluorine-containing material.

2. The negative electrode active material for a secondary battery according to claim 1, wherein in the coating layer, a fluorine content A in a surface of the coating layer, and a fluorine content B at a depth corresponding to half a thickness of the coating layer satisfy B > 0.1A.

3. The negative electrode active material for a secondary battery according to claim 1 or 2,
wherein the fluorine-containing material includes a fluorine-containing organic polymer and lithium fluoride (LiF), and
the fluorine-containing organic polymer has a carbon-carbon double bond in part of a molecular structure thereof.

4. The negative electrode active material for a secondary battery according to claim 3, wherein the fluorine-containing organic polymer has a -CH=CF-structure at least in part of a molecular structure thereof.

5. The negative electrode active material for a secondary battery according to claim 4,
wherein the fluorine-containing organic polymer includes polyvinylidene fluoride (PVdF), and
some of carbon-carbon single bonds in the polyvinylidene fluoride have been changed to carbon-carbon double bonds.

6. The negative electrode active material for a secondary battery according to any one of claims 1 to 5, wherein the coating layer has a thickness of 1 nm or more and 100 nm or less.

7. The negative electrode active material for a secondary battery according to any one of claims 1 to 6, wherein a mass of the carbon material in the coating layer is larger than a mass of the fluorine-containing material in the coating layer.

8. The negative electrode active material for a secondary battery according to any one of claims 1 to 7, wherein the matrix is at least one of a silicon compound phase and a carbon phase.

9. The negative electrode active material for a secondary battery according to claim 8,
wherein the silicon compound phase includes, as a main component, a silicate phase including lithium (Li), silicon (Si), and oxygen (O),
the silicate phase includes an element M other than lithium (Li), silicon (Si), and oxygen (O), and
the element M includes at least one selected from the group consisting of sodium (Na), potassium (K), calcium (Ca), magnesium (Mg), barium (Ba), zirconium (Zr), niobium (Nb), tantalum (Ta), vanadium (V), titanium (Ti), phosphorus (P), bismuth (Bi), zinc (Zn), tin (Sn), lead (Pb), antimony (Sb), cobalt (Co), fluorine (F), tungsten (W), aluminum (Al), boron (B), and rare-earth elements.

10. A method for producing a negative electrode active material for a secondary battery, comprising the steps of
obtaining composite particles each including a matrix, and a silicon phase dispersed in the matrix;
coating each of the composite particles with a carbon material, to form a coating layer;
mixing the composite particles each having the coating layer formed thereon with a powder of a fluorine-containing organic polymer, to obtain a mixture; and
heat-treating the mixture at a temperature greater than or equal to a melting point of the fluorine-containing organic polymer, to allow the fluorine-containing organic polymer to permeate into the coating layer.

11. The method for producing a negative electrode active material for a secondary battery according to claim 10, wherein the fluorine-containing organic polymer includes polyvinylidene fluoride (PVdF).

12. The method for producing a negative electrode active material for a secondary battery according to claim 10 or 11, wherein in the step of obtaining the mixture, the fluorine-containing organic polymer has a particle diameter smaller than a particle diameter of the composite particles.

13. The method for producing a negative electrode active material for a secondary battery according to any one of claims 10 to 12, wherein a mass proportion of the fluorine-containing organic polymer to the composite particles in the step of obtaining the mixture is smaller than a mass proportion of the carbon material to the composite particles in the step of forming the coating layer.

14. A secondary battery comprising:
a positive electrode; a negative electrode; an electrolyte; and an separator interposed between the positive electrode and the negative electrode,
wherein the negative electrode includes a current collector and a negative electrode active material layer, and
the negative electrode active material layer includes the negative electrode active material for a secondary battery according to any one of claims 1 to 9.
